# EUROPEAN PATENT SPECIFICATION

(11) **EP 4 257 746 B1**
(45) Date of publication and mention of the grant of the patent: **11.12.2024**
(21) Application number: 23166662.9
(22) Date of filing: 05.04.2023
(51) Int. Cl.: E01C 19/48

(54) **ROAD PAVING MACHINE**
STRASSENFERTIGER
FINISSEUSE DE ROUTE

(30) Priority: 08.04.2022 JP 2022064599
(43) Date of publication of application: 11.10.2023
(73) Proprietor: Sumitomo (S.H.I.) Construction Machinery Co., Ltd., Shinagawa-ku Tokyo 141-6025 (JP)
(72) Inventor: TERAMOTO, Tota, Chiba, 263-0001 (JP)
(74) Representative: Louis Pöhlau Lohrentz

(56) References cited:
- DE-A1- 102022 123 857
- JP-A- 2019 007 307
- US-A- 5 484 227
- US-A1- 2018 030 672
- US-A1- 2022 002 953

## Description

### BACKGROUND OF THE INVENTION

### Field of the Invention

The present disclosure relates to a road paving machine.

### Description of Related Art

In the related art, an asphalt finisher including a camera that captures an image of a space to the left of a left hopper wing which is in a blind spot when viewed from a driver's seat is known (see Japanese Unexamined Patent Publication No. 2019-7307). United States Patent Publication No. 2018/0030672 discloses a control system for a road paver which comprises a camera system configured to generate image data of an environment of the road paver.

The camera is attached to a tractor to protrude to the left of a left end of the left hopper wing in a fully open state.

### SUMMARY OF THE INVENTION

However, in the configuration, there is a possibility in which the camera attached to protrude to the left of the tractor hits an obstacle such as a tree during construction.

Thus, it is desirable to provide a road paving machine which can suppress that an information acquisition device such as the camera attached out of a range of the width of the tractor hits the obstacle during construction.

According to an embodiment of the present disclosure, there is provided a road paving machine including a tractor, a hopper that is provided in front of the tractor and that receives a paving material, a conveyor that feeds the paving material in the hopper to a rear of the tractor, a screw that spreads the paving material fed by the conveyor at the rear of the tractor, a screed that levels the paving material spread by the screw at a rear of the screw and that is capable of expanding and contracting in a vehicle width direction, an information acquisition device that is disposed out of a range of a width of the tractor and that acquires information of surroundings and includes an object detection device or a camera, in which an Obstacle detection device detects an obstacle in a collision course of the information acquisition device.

The road paving machine described above can suppress that the information acquisition device attached out of the range of the width of the tractor hits the obstacle during construction.

### BRIEF DESCRIPTION OF THE DRAWINGS

Fig. 1 is a side view of an asphalt finisher.
Fig. 2 is a top view of the asphalt finisher.
Fig. 3 is a diagram showing a configuration example of an operation support system.
Fig. 4 is a schematic perspective view of a paving mold.
Fig. 5 is a flowchart showing an example of a flow of target setting processing.
Fig. 6 is a flowchart showing an example of a flow of alarm processing.

### DETAILED DESCRIPTION OF THE INVENTION

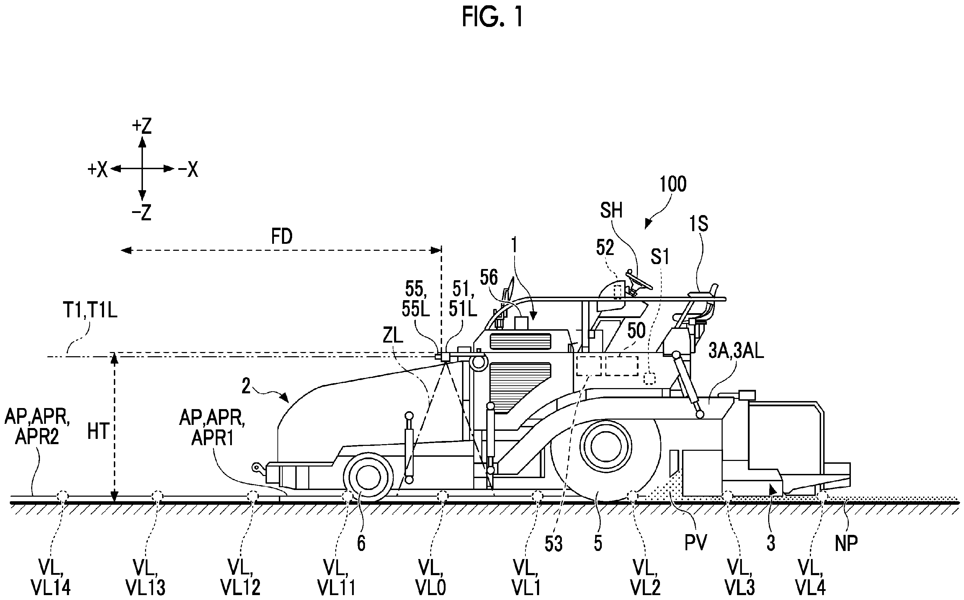

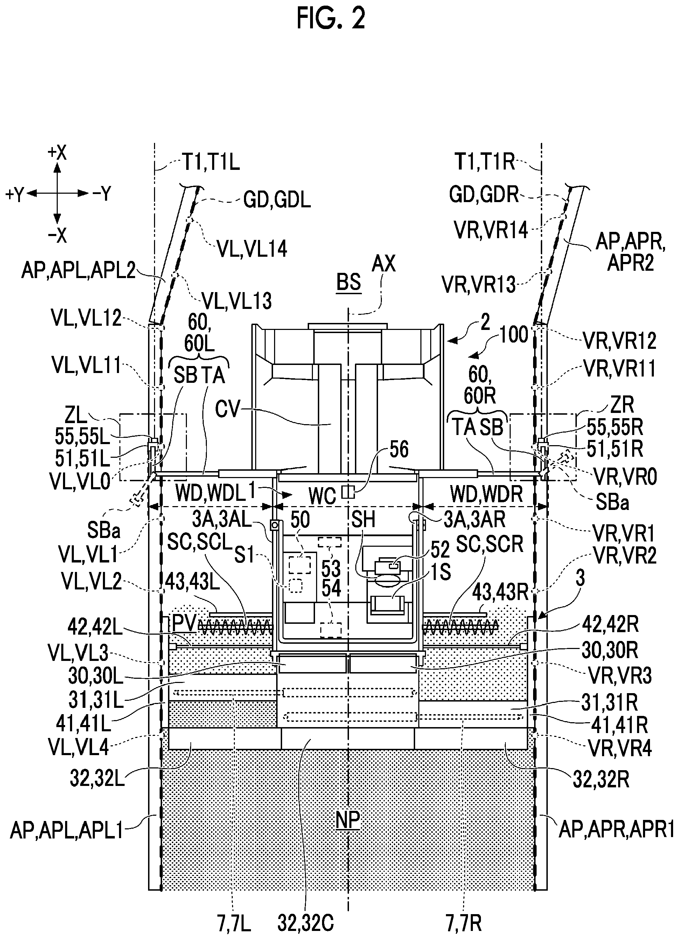

Fig. 1 is a side view of an asphalt finisher 100 that is an example of a road machine according to an embodiment of the present disclosure. Fig. 2 is a top view of the asphalt finisher 100. In the shown example, the asphalt finisher 100 is a wheel type asphalt finisher and is mainly configured by a tractor 1, a hopper 2, and a screed 3. Hereinafter, a direction of the hopper 2 viewed from the tractor 1 (+X direction) will be referred to as forward, and a direction of the screed 3 viewed from the tractor 1 (-X direction) will be referred to as rearward.

The tractor 1 is a mechanism for moving the asphalt finisher 100. In the shown example, the tractor 1 rotates a rear wheel 5 using a rear wheel traveling hydraulic motor and rotates a front wheel 6 using a front wheel traveling hydraulic motor to move the asphalt finisher 100. The rear wheel traveling hydraulic motor and the front wheel traveling hydraulic motor rotate by receiving supply of a hydraulic oil from a hydraulic pump. However, the front wheel 6 may be a driven wheel.

The asphalt finisher 100 may be a crawler type asphalt finisher. In this case, a combination of the rear wheel 5 and the front wheel 6 is replaced with a combination of a left crawler and a right crawler.

The hopper 2 is a mechanism for receiving a paving material PV. In the shown example, the hopper 2 is provided in front of the tractor 1 and is configured to be capable of being opened and closed in a vehicle width direction (Y-axis direction) by a hopper cylinder. The asphalt finisher 100 usually receives the paving material PV (for example, an asphalt mixture) from a loading platform of a dump truck when the hopper 2 is in a fully open state. The dump truck is an example of a transport vehicle that transports the paving material PV. Figs. 1 and 2 show that the hopper 2 is in a fully open state. When the paving material PV in the hopper 2 decreases during construction, an operator of the asphalt finisher 100 closes the hopper 2 and collects the paving material PV near an inner wall of the hopper 2 at a central portion of the hopper 2. This is to enable a conveyor CV which is at the central portion of the hopper 2 to feed the paving material PV to the rear of the tractor 1. The paving material PV fed to the rear of the tractor 1 by the conveyor CV is spread in the vehicle width direction at the rear of the tractor 1 and in front of the screed 3 by the screw SC. In the shown example, the screw SC is in a state where a left extension screw SCL and a right extension screw SCR are connected to each other. For the sake of clarity, Figs. 1 and 2 omit showing the paving material PV in the hopper 2, show the paving material PV spread by the screw SC in a coarse dot pattern, and show a newly constructed pavement body NP leveled by the screed 3 in a fine dot pattern.

The screed 3 is a mechanism for leveling the paving material PV. In the shown example, the screed 3 includes a front screed 30 and a rear screed 31. The front screed 30 includes a left front screed 30L and a right front screed 30R. The rear screed 31 is a screed that is capable of expanding and contracting in the vehicle width direction and includes a left rear screed 31L and a right rear screed 31R. Specifically, the rear screed 31 is expanded and contracted by a screed expanding and contracting cylinder 7 provided in the screed 3. More specifically, the screed expanding and contracting cylinder 7 includes a left screed expanding and contracting cylinder 7L and a right screed expanding and contracting cylinder 7R. In addition, the left rear screed 31L is expanded and contracted by the left screed expanding and contracting cylinder 7L, and the right rear screed 31R is expanded and contracted by the right screed expanding and contracting cylinder 7R.

In addition, the screed 3 is a floating screed pulled by the tractor 1 and is connected to the tractor 1 via a leveling arm 3A. The leveling arm 3A includes a left leveling arm 3AL disposed on a left side of the tractor 1 and a right leveling arm 3AR disposed on a right side of the tractor 1. An end portion leveling device may be disposed at an end portion of the rear screed 31.

A side plate 41 is attached to a distal end of the rear screed 31. In the shown example, a left side plate 41L is attached to a left end of the left rear screed 31L, and a right side plate 41R is attached to a right end of the right rear screed 31R.

A tread plate 32 is attached to the rear of the screed 3. Specifically, the tread plate 32 is attached to the rear of the screed 3 such that a worker at the rear of the screed 3 can move back and forth in the vehicle width direction without stepping on the newly constructed pavement body NP. In the shown example, the tread plate 32 includes a central tread plate 32C attached to the rear of the front screed 30, a left tread plate 32L attached to the rear of the left rear screed 31L, and a right tread plate 32R attached to the rear of the right rear screed 31R.

A mold board 42 is attached to a front portion of the screed 3. The mold board 42 is configured to be capable of adjusting the amount of the paving material PV staying in front of the screed 3. The paving material PV reaches under the screed 3 through a gap between a lower end of the mold board 42 and a roadbed BS. In the shown example, the mold board 42 includes a left mold board 42L disposed in front of the left rear screed 31L and a right mold board 42R disposed in front of the right rear screed 31R.

The screw SC is disposed in front of the mold board 42, and a retaining plate 43 is disposed in front of the screw SC. Specifically, the retaining plate 43 includes a left retaining plate 43L disposed in front of the left extension screw SCL and a right retaining plate 43R disposed in front of the right extension screw SCR. The retaining plate 43 may be omitted.

A traveling speed sensor S1, a controller 50, an object detection device 51, a vehicle-mounted display device 52, a steering device 53, a screed expanding and contracting device 54, an obstacle detection device 55, and an alarm device 56 are attached to the tractor 1.

The traveling speed sensor S1 is configured to be capable of detecting a traveling speed of the asphalt finisher 100. In the shown example, the traveling speed sensor S1 is a wheel speed sensor and is capable of detecting the rotation angular speed and the rotation angle of the rear wheel 5 and the traveling speed and the traveling distance of the asphalt finisher 100.

The controller 50 is a control device that controls the asphalt finisher 100. In the shown example, the controller 50 is configured by a microcomputer including a CPU, a volatile storage device, a non-volatile storage device, and the like. Each function of the controller 50 is realized as the CPU executes a program stored in the non-volatile storage device. However, each function of the controller 50 is not only realized by software but may be realized by hardware, or may be realized by a combination of hardware and software.

The object detection device 51 is an example of an information acquisition device that acquires information of surroundings of the asphalt finisher 100 and is configured to be capable of acquiring information related to a feature within a predetermined range of a road which is a construction target and outputting the acquired information to the controller 50. That is, the object detection device 51 is configured to use the predetermined range of the road which is the construction target as a monitoring target. The predetermined range on the road is, for example, a range that is positioned in front of the screed 3 and that includes a boundary line of the road. In the shown example, the predetermined range on the road is a range that has a front-rear width and a right-left width which are larger than the width of a paving mold and for example, is a range of 2 meters square.

The range positioned in front of the screed 3 is, for example, a range positioned in front of the hopper 2, a range positioned in front of an axle of the front wheel 6,
a range positioned in front of an axle of the rear wheel 5, a range positioned in front of the screw SC, and the like.

The feature within the predetermined range includes, for example, the roadbed BS and an object AP outside the roadbed BS. The object AP is a feature used in order to determine the position of an end surface of a laid pavement body in a width direction. In the examples shown in Figs. 1 and 2, the object AP is a paving mold that has a predetermined thickness (height) and includes a left object APL on the left side of the asphalt finisher 100 and a right object APR on the right side of the asphalt finisher 100. Specifically, the left object APL includes a first left object APL1 and a second left object APL2, and the right object APR includes a first right object APR1 and a second right object APR2. The object AP may be an L-shaped side groove block, a rim stone block, a cutting step portion of an existing pavement body, or the like. The cutting step portion of the existing pavement body means a step portion that is formed when an old pavement body is cut and a new pavement body is laid and that is between a surface of a cut portion and a surface of an uncut portion. The object AP may be a feature that has almost no thickness, such as a line drawn on the ground, a tape attached to the ground, and a thread stretched along the ground. The information related to a feature includes, for example, the height of the feature, the color of the surface of the feature, the reflectance of the surface of the feature, or the like. For the sake of clarity, Fig. 1 omits showing the left object APL.

In the shown example, the object detection device 51 is a stereo camera configured to be capable of monitoring the predetermined range. The object detection device 51 may be a monocular camera, a LIDAR, a millimeter wave radar, a laser radar, a laser scanner, a distance image camera, a laser range finder, an ultrasound sensor, a combination thereof, or the like, which is configured to be capable of monitoring the predetermined range.

In addition, the stereo camera, which is the object detection device 51, is desirably configured to have an automatic exposure adjustment function. With the configuration, the object detection device 51 can acquire information related to a feature within the predetermined range, regardless of day or night, that is, without requiring special lighting.

In the shown example, the object detection device 51 includes a left object detection device 51L provided on the left side of the asphalt finisher 100 and a right object detection device 51R provided on the right side of the asphalt finisher 100.

The left object detection device 51L is configured to be capable of monitoring the ground on the left side of the asphalt finisher 100. In the shown example, the left object detection device 51L is a stereo camera that monitors a left monitoring range ZL (a range surrounded by a one-dot chain line in Fig. 2) on the ground on the left side of the asphalt finisher 100.

The right object detection device 51R is configured to be capable of monitoring the ground on the right side of the asphalt finisher 100. In the shown example, the right object detection device 51R is a stereo camera that monitors a right monitoring range ZR (a range surrounded by a one-dot chain line in Fig. 2) on the ground on the right side of the asphalt finisher 100.

The object detection device 51 may be attached to the asphalt finisher 100 via an attachment member 60. The attachment member 60 is a member used in order to attach the object detection device 51 to the asphalt finisher 100. In the shown example, the attachment member 60 includes a left attachment member 60L and a right attachment member 60R. In the example shown in Fig. 2, the left object detection device 51L is attached to a left front end portion of the tractor 1 via the left attachment member 60L, and the right object detection device 51R is attached to a right front end portion of the tractor 1 via the right attachment member 60R. The left object detection device 51L may be attached to another portion of the asphalt finisher 100, such as a left front end portion of the hopper 2, via the left attachment member 60L. Similarly, the right object detection device 51R may be attached to another portion of the asphalt finisher 100, such as a right front end portion of the hopper 2, via the right attachment member 60R.

In addition, the object detection device 51 may be configured to be capable of monitoring an expansion and contraction state of the rear screed 31. For example, the object detection device 51 may additionally include a stereo camera configured to be capable of monitoring an end portion of the left rear screed 31L and a stereo camera configured to be capable of monitoring an end portion of the right rear screed 31R. In this case, the object detection device 51 may be disposed at the screed 3. For example, the object detection device 51 may be disposed at the rear screed 31. In addition, in a case where the end portion leveling device is disposed at the end portion of the rear screed 31, the object detection device 51 may be disposed at the end portion leveling device.

In addition, the object detection device 51 is attached to the attachment member 60 to face vertically downward in the example shown in Fig. 2, but may be attached to the attachment member 60 to face another direction such as obliquely downward.

In addition, in the example shown in Fig. 2, the left attachment member 60L is configured by an expanding and contracting member TA that is capable of expanding and contracting in the width direction and a pivoting member SB that is pivotably connected to a distal end of the expanding and contracting member TA. A pivoting member SBa represented by a broken line in Fig. 2 indicates a state when the pivoting member SB has pivoted. The same applies to the right attachment member 60R.

As described above, the attachment member 60 is configured to be capable of moving a monitoring range of the object detection device 51 with the expanding and contracting member TA and the pivoting member SB. This is to enable response to a change in a pavement width or the like. In this case, the controller 50 may be configured to control the pivoting of the pivoting member SB such that the object detection device 51 follows the object AP or may be configured to control the expansion and contraction of the expanding and contracting member TA. Accordingly, the controller 50 can continuously include the object AP within the monitoring range of the object detection device 51 even when the position of the object AP changes in the vehicle width direction.

The attachment member 60 may include at least one of a sensor that detects an expansion and contraction amount of the expanding and contracting member TA and a sensor that detects a pivoting amount (pivoting angle) of the pivoting member SB.

At least one of the expanding and contracting member TA and the pivoting member SB may be omitted. For example, the attachment member 60 may be configured to be incapable of expanding and contracting and to be incapable of pivoting. That is, the attachment member 60 may be a rodshaped member that is incapable of expanding and contracting and that is incapable of pivoting.

In addition, the object detection device 51 may be directly attached to the asphalt finisher 100 without via the attachment member 60.

In addition, the object detection device 51 may be configured to be one device that can simultaneously monitor the ground on the left side of the asphalt finisher 100 and the ground on the right side of the asphalt finisher 100. Specifically, the object detection device 51 may be configured to be one device that can simultaneously monitor the left object APL and the right object APR. In this case, the object detection device 51 may be attached to a front end central portion of an upper surface of the tractor 1.

In addition, a steering angle sensor configured to be capable of detecting a steering angle of the asphalt finisher 100, a screed expansion and contraction amount sensor configured to be capable of detecting an expansion and contraction amount of the rear screed 31, and the like may be attached to the asphalt finisher 100.

The vehicle-mounted display device 52 is configured to be capable of displaying information related to the asphalt finisher 100. In the shown example, the vehicle-mounted display device 52 is a liquid crystal display provided in front of a driver's seat 1S. However, the vehicle-mounted display device 52 may include a display device provided at at least one of a left end portion and a right end portion of the screed 3.

The steering device 53 is configured to be capable of steering the asphalt finisher 100. In the shown example, the steering device 53 is configured to expand and contract a front wheel steering cylinder provided close to a front axle. Specifically, the steering device 53 includes a steering electromagnetic control valve that controls the flow rate of a hydraulic oil flowing from the hydraulic pump to the front wheel steering cylinder and the flow rate of the hydraulic oil discharged from the front wheel steering cylinder. The steering electromagnetic control valve is configured to control the inflow and outflow of the hydraulic oil in the front wheel steering cylinder in accordance with the rotation of a steering wheel SH (handle), which is a manipulation device. The steering electromagnetic control valve may be configured to control the inflow and outflow of the hydraulic oil in the front wheel steering cylinder in response to an operation of an input switch which is a manipulation device different from the steering wheel SH, regardless of the movement of the steering wheel SH. In addition, the steering electromagnetic control valve may be configured to control the inflow and outflow of the hydraulic oil in the front wheel steering cylinder in accordance with a steering command from the controller 50, regardless of the rotation of the steering wheel SH. That is, the controller 50 may be configured to be capable of automatically steering the asphalt finisher 100 regardless of the presence or absence of an operation of the steering wheel SH by a driver.

In a case where the asphalt finisher 100 is a crawler type asphalt finisher, the steering device 53 is configured to control each of a pair of right and left crawlers. The crawler type asphalt finisher includes a left operation lever that is a manipulation device for operating the left crawler and a right operation lever that is a manipulation device for operating the right crawler, instead of the steering wheel SH.

Specifically, the steering device 53 includes a left steering electromagnetic control valve that controls the flow rate of a hydraulic oil flowing from the hydraulic pump to a left traveling hydraulic motor for rotating the left crawler and a right steering electromagnetic control valve that controls the flow rate of a hydraulic oil flowing from the hydraulic pump to a right traveling hydraulic motor for rotating the right crawler. In addition, the left steering electromagnetic control valve is configured to control the inflow and outflow of the hydraulic oil in the left traveling hydraulic motor in accordance with a manipulated variable (inclination angle) of the left operation lever. Similarly, the right steering electromagnetic control valve is configured to control the inflow and outflow of the hydraulic oil in the right traveling hydraulic motor in accordance with a manipulated variable (inclination angle) of the right operation lever. The left steering electromagnetic control valve may be configured to control the inflow and outflow of the hydraulic oil in the left traveling hydraulic motor in accordance with a steering command from the controller 50, regardless of the presence or absence of an operation of the left operation lever by the driver. Similarly, the right steering electromagnetic control valve may be configured to control the inflow and outflow of the hydraulic oil in the right traveling hydraulic motor in accordance with a steering command from the controller 50, regardless of the presence or absence of an operation of the right operation lever by the driver.

The screed expanding and contracting device 54 is configured to be capable of expanding and contracting the rear screed 31 in the vehicle width direction (Y-axis direction). In the shown example, the screed expanding and contracting device 54 is configured to expand and contract the screed expanding and contracting cylinder 7 provided in the screed 3. Specifically, the screed expanding and contracting device 54 includes a screed expanding and contracting electromagnetic control valve that controls the flow rate of a hydraulic oil flowing from the hydraulic pump to the screed expanding and contracting cylinder 7 and the flow rate of the hydraulic oil discharged from the screed expanding and contracting cylinder 7. The screed expanding and contracting electromagnetic control valve is configured to control the inflow and outflow of the hydraulic oil in the screed expanding and contracting cylinder 7 in response to an operation of an expansion and contraction button set (not shown), which is a manipulation device provided close to the vehicle-mounted display device 52. The expansion and contraction button set typically includes a left expansion and contraction button set for expanding and contracting the left rear screed 31L and a right expansion and contraction button set for expanding and contracting the right rear screed 31R. The screed expanding and contracting electromagnetic control valve may be configured to control the inflow and outflow of the hydraulic oil in the screed expanding and contracting cylinder 7 in accordance with an expansion and contraction command from the controller 50, regardless of the operation of the expansion and contraction button set. That is, the controller 50 may be configured to be capable of automatically expanding and contracting the rear screed 31 regardless of the presence or absence of the operation of the expansion and contraction button set by the driver.

Specifically, the screed expanding and contracting device 54 includes a left expansion and contraction electromagnetic control valve that controls the flow rate of a hydraulic oil flowing from the hydraulic pump to the left screed expanding and contracting cylinder 7L for expanding and contracting the left rear screed 31L and a right expansion and contraction electromagnetic control valve that controls the flow rate of a hydraulic oil flowing from the hydraulic pump to the right screed expanding and contracting cylinder 7R for expanding and contracting the right rear screed 31R. In addition, the left expansion and contraction electromagnetic control valve is configured to control the inflow and outflow of the hydraulic oil in the left screed expanding and contracting cylinder 7L in accordance with operation content of the left expansion and contraction button set. Similarly, the right expansion and contraction electromagnetic control valve is configured to control the inflow and outflow of the hydraulic oil in the right screed expanding and contracting cylinder 7R in accordance with operation content of the right expansion and contraction button set. The left expansion and contraction electromagnetic control valve may be configured to control the inflow and outflow of the hydraulic oil in the left screed expanding and contracting cylinder 7L in accordance with an expansion and contraction command from the controller 50, regardless of the presence or absence of an operation of the left expansion and contraction button set by the driver. Similarly, the right expansion and contraction electromagnetic control valve may be configured to control the inflow and outflow of the hydraulic oil in the right screed expanding and contracting cylinder 7R in accordance with an expansion and contraction command from the controller 50, regardless of the presence or absence of an operation of the right expansion and contraction button set by the driver.

The obstacle detection device 55 is a device configured to be capable of detecting an obstacle in a collision course of the information acquisition device. The obstacle is, for example, a tree, a tool such as a rake, a human such as a worker working in the surroundings of the asphalt finisher 100, a machine such as a stamper, or an animal. The collision course is a course followed by the information acquisition device that advances with the advancement of the asphalt finisher 100. In a case where there is the obstacle at a position separated by a predetermined distance on the collision course of the information acquisition device, the information acquisition device and the obstacle thereof collide with each other when the asphalt finisher 100 travels straight by the predetermined distance.

In the shown example, the obstacle detection device 55 is a millimeter wave radar and is configured to be capable of detecting an obstacle in a collision course T1 of the object detection device 51 that is an example of the information acquisition device. The obstacle detection device 55 may be an infrared laser sensor, a LIDAR, an ultrasound sensor, a camera, or the like. In addition, the obstacle detection device 55 may be the object detection device 51. In this case, the object detection device 51 may be configured to be capable of simultaneously monitoring the lower side and the front. In a case where the object detection device 51 is a stereo camera, the object detection device 51 may be configured to be capable of simultaneously imaging the lower side and the front. In addition, the obstacle detection device 55 may be configured to be capable of detecting a distance to an obstacle.

In the shown example, the obstacle detection device 55 includes a left obstacle detection device 55L attached to a front surface of the left object detection device 51L and a right obstacle detection device 55R attached to a front surface of the right object detection device 51R. In addition, as shown in Fig. 2, the left obstacle detection device 55L is disposed to be capable of detecting an obstacle in a left collision course T1L of the left object detection device 51L, and the right obstacle detection device 55R is disposed to be capable of detecting an obstacle in a right collision course T1R of the right object detection device 51R.

The alarm device 56 is configured to issue an alarm in accordance with a command from the outside. In the shown example, the alarm device 56 is configured to output an audible alarm in accordance with an alarm start command from the controller 50. However, the alarm device 56 may be configured to output a visual alarm or may be configured to simultaneously output a visual alarm and an audible alarm. The alarm device 56 that outputs a visual alarm is, for example, a rotating light, a liquid crystal display, an electric bulletin board, or the like. The visual alarm may be a text message or may be a figure. The alarm device 56 that outputs an audible alarm is, for example, a buzzer, a speaker, or the like. The audible alarm may be an alarm sound or may be a voice message.

In addition, the alarm device 56 is configured to stop an alarm in accordance with a command from the outside. In the shown example, the alarm device 56 is configured to stop an output of an alarm in accordance with an alarm stop command from the controller 50.

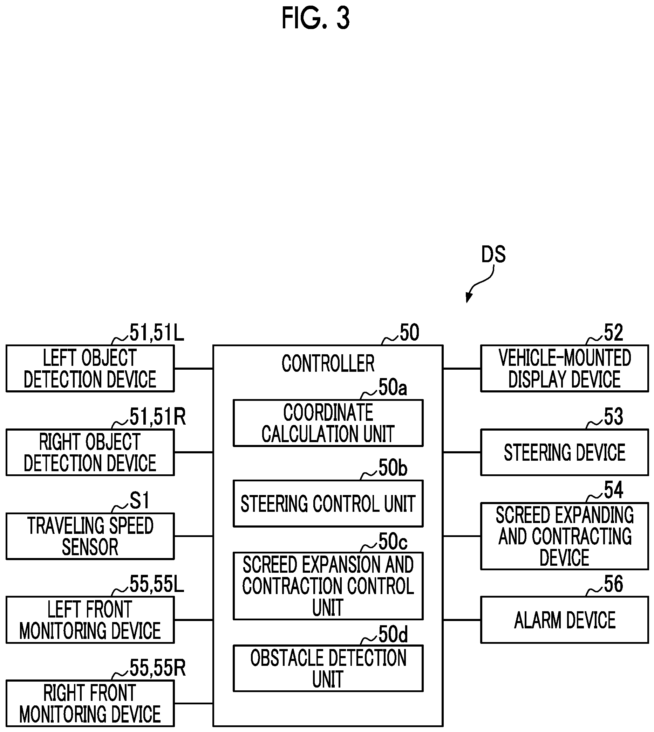

Next, a configuration example of an operation support system DS mounted on the asphalt finisher 100 will be described with reference to Fig. 3. Fig. 3 is a block diagram showing the configuration example of the operation support system DS.

The operation support system DS is mainly configured by the controller 50, the left object detection device 51L, the right object detection device 51R, the traveling speed sensor S1, the vehicle-mounted display device 52, the steering device 53, the screed expanding and contracting device 54, the obstacle detection device 55, the alarm device 56, and the like.

In the example shown in Fig. 3, the controller 50 includes a coordinate calculation unit 50a, a steering control unit 50b, a screed expansion and contraction control unit 50c, and an obstacle detection unit 50d.

The coordinate calculation unit 50a is configured to calculate coordinates on the boundary line of the construction target range based on information related to a feature acquired by the object detection device 51. A guide line GD shown by a thick broken line of Fig. 2 is an example of the boundary line of the road which is the construction target and is an imaginary line representing a guide surface. The guide surface is an imaginary surface recognized as a surface to match an end surface of a laid pavement body in the width direction. In the example shown in Fig. 2, the guide line GD includes a left guide line GDL that represents a left guide surface which is a surface to match a left end surface of the newly constructed pavement body NP and a right guide line GDR that represents a right guide surface which is a surface to match a right end surface of the newly constructed pavement body NP.

Specifically, the coordinate calculation unit 50a calculates coordinates on the guide line GD based on information related to the object AP acquired by the object detection device 51. More specifically, the coordinate calculation unit 50a calculates coordinates of a point VL configuring the left guide line GDL based on information related to the left object APL acquired by the left object detection device 51L and calculates coordinates of a point VR configuring the right guide line GDR based on information related to the right object APR acquired by the right object detection device 51R.

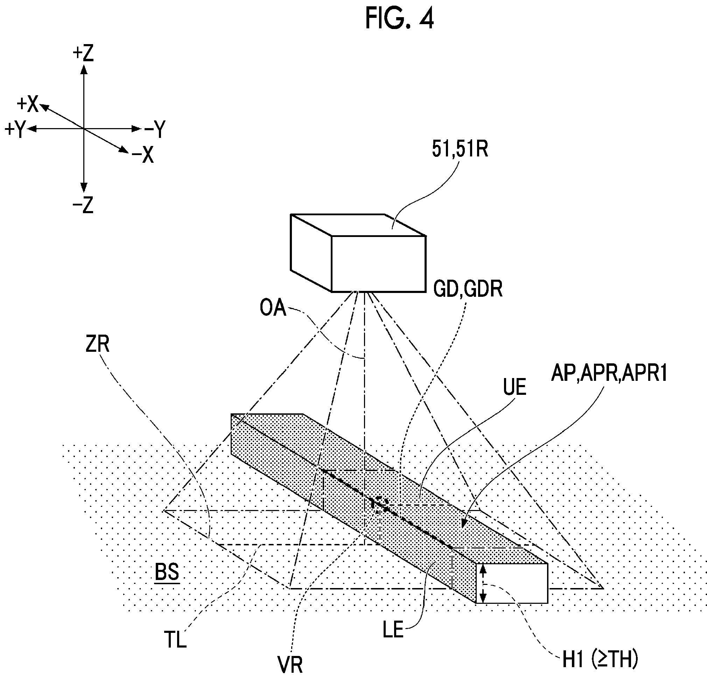

For example, as shown in Fig. 4, the coordinate calculation unit 50a generates the right guide line GDR using an image recognition technique such that an imaginary line representing an angle (edge) between a left end surface LE and an upper end surface UE of the right object APR which is in the right monitoring range ZR of the right object detection device 51R is the right guide line GDR. Then, the coordinate calculation unit 50a calculates coordinates of an intersection point of the generated right guide line GDR and a cross-sectional line TL as coordinates of the point VR. In the example of Fig. 4, the cross-sectional line TL is a straight line that is parallel to the vehicle width direction (Y-axis direction) and that intersects a center line (optical axis OA) of the right object detection device 51R. Fig. 4 is a schematic perspective view of a paving mold which is the right object APR viewed from the rear of the asphalt finisher 100 and schematically shows a positional relationship between the right object detection device 51R and the right object APR.

For example, the coordinate calculation unit 50a uses a distance image related to the right monitoring range ZR that is generated based on an output of the stereo camera which is the right object detection device 51R and calculates coordinates of a pixel including the intersection point of the right guide line GDR and the cross-sectional line TL as coordinates of the point VR. The distance image is a data set in which each pixel value of a pixel group which is a two-dimensional array is represented by a distance from the right object detection device 51R.

The coordinates of the point VR are one set of coordinates in a predetermined coordinate system. The predetermined coordinate system is, for example, the world geodetic system. The world geodetic system is a three-dimensional orthogonal XYZ coordinate system in which the origin is at the center of gravity of the earth, the X-axis is in a direction of an intersection point of the Greenwich meridian and the equator, the Y-axis is in a direction of 90 degrees east longitude, and the Z-axis is in a direction of the North Pole. However, the predetermined coordinate system may be a local coordinate system of which the origin is a predetermined point on the asphalt finisher 100. That is, the predetermined coordinate system may be a local coordinate system of which the origin moves as the asphalt finisher 100 moves. Specifically, the predetermined coordinate system may be, for example, a three-dimensional orthogonal coordinate system of which the origin is a center point of the asphalt finisher 100. In this case, the center point of the asphalt finisher 100 may be, for example, a center point of the tractor 1 or may be an intersection point of the axle of the rear wheel 5 and the front-rear axis AX (see Fig. 2). In addition, the predetermined coordinate system may be a local coordinate system of which the origin does not move even when the asphalt finisher 100 moves. In this case, the local coordinate system may be a coordinate system of which the origin is the center point of the asphalt finisher 100 when construction starts. In addition, the predetermined coordinate system may be a plane orthogonal coordinate system such as a surveying plane coordinate system used in a total station or the like.

For example, the coordinate calculation unit 50a may be configured to extract a pixel having a difference from a left pixel value that is equal to or larger than a predetermined threshold, from pixels configuring a distance image, and to derive a single line that is the guide line GD from disposition of a plurality of extracted pixels. The single line is a straight line, a curved line, or a combination thereof. As a method of deriving the single line, any image recognition technique such as the Hough transform can be used.

The coordinate calculation unit 50a may eliminate effects of a portion where the positions of the extracted pixels vary by executing averaging processing. Specifically, in a portion where two paving molds are in contact with each other or an image portion corresponding to an irregular portion of the cutting step portion or the like, such variations occur in some cases.

The predetermined threshold is a threshold TH related to the height of a paving mold in this example. In this case, as shown in Fig. 4, the coordinate calculation unit 50a can generate an imaginary line representing an upper left edge of the right object APR that is a paving mold having a height H1 which is equal to or larger than the threshold TH as the right guide line GDR.

The threshold TH may be configured to be set beforehand in accordance with the height of a paving mold that is actually used. The use of the threshold TH set in accordance with the height of the paving mold that is actually used enables generation of a guide line based on an edge of a thin paving mold. In addition, the use of the threshold TH set in accordance with the height of the paving mold that is actually used can suppress that the coordinate calculation unit 50a mistakenly generates a guide line based on the shape (edge) of a feature other than the paving mold.

After then, as shown in Fig. 4, the coordinate calculation unit 50a calculates the coordinates of the intersection point of the generated right guide line GDR and the cross-sectional line TL as coordinates of the point VR.

Although the description made above relates to processing of calculating the coordinates of the point VR on the right guide line GDR from a distance image related to the right monitoring range ZR, the same applies to processing of calculating coordinates of the point VL on the left guide line GDL from a distance image related to the left monitoring range ZL.

In addition, in a case where the object detection device 51 is a monocular camera, the "distance image" in the description above is replaced with an "image". In this case, the "pixel value" is represented by color information or the like, not by a distance. The color information may be brightness.

In this manner, the coordinate calculation unit 50a intermittently calculates and stores coordinates of each of the point VL and the point VR. In the shown example, the coordinate calculation unit 50a is configured to calculate and store the coordinates of each of the point VL and the point VR each time the asphalt finisher 100 advances by a predetermined distance (for example, 15 cm). The coordinate calculation unit 50a may be configured to calculate and store the coordinates of each of the point VL and the point VR each time a predetermined time elapses.

Fig. 1 shows a state where the coordinate calculation unit 50a intermittently calculates and stores the coordinates of the point VL. In Fig. 1, a point VL0 corresponds to the point VL derived by the coordinate calculation unit 50a based on an output of the left object detection device 51L at the present time point. In addition, a point VL1 corresponds to the point VL derived by the coordinate calculation unit 50a based on an output of the left object detection device 51L at one time point in the past. The same applies to a point VL2 to a point VL4. In addition, a point VL11 corresponds to the point VL to be derived by the coordinate calculation unit 50a based on an output of the left object detection device 51L at one time point in the future. The same applies to a point VL12 to a point VL14. That is, at the present time point, the coordinate calculation unit 50a has already calculated and stored a coordinate value of each of the point VL0 and the point VL1 to the point VL4.

Similar to Fig. 1, Fig. 2 also shows a state where the coordinate calculation unit 50a intermittently calculates and stores coordinates of each of the point VL and the point VR. In Fig. 2, a point VR0 corresponds to the point VR derived by the coordinate calculation unit 50a based on an output of the right object detection device 51R at the present time point. The same applies to the point VL0. In addition, a point VR1 corresponds to the point VR derived by the coordinate calculation unit 50a based on an output of the right object detection device 51R at one time point in the past. The same applies to a point VR2 to a point VR4. In addition, a point VL1 corresponds to the point VL derived by the coordinate calculation unit 50a based on an output of the left object detection device 51L at one time point in the past. The same applies to a point VL2 to a point VL4. In addition, a point VR11 corresponds to the point VR to be derived by the coordinate calculation unit 50a based on an output of the right object detection device 51R at one time point in the future. The same applies to a point VR12 to a point VR14. In addition, a point VL11 corresponds to the point VL to be derived by the coordinate calculation unit 50a based on an output of the left object detection device 51L at one time point in the future. The same applies to the point VL11 to the point VL14.

The steering control unit 50b is configured to be capable of automatically steering the asphalt finisher 100 regardless of an operation of a manipulation device such as a traveling speed dial. The steering control unit 50b may be configured to control the traveling speed of the asphalt finisher 100 when automatically steering the asphalt finisher 100. In addition, the steering control unit 50b may be omitted.

The screed expansion and contraction control unit 50c is configured to be capable of automatically expanding and contracting the right and left rear screeds 31 that can expand and contract regardless of an operation of a manipulation device such as the expansion and contraction button set. The screed expansion and contraction control unit 50c may be configured to be capable of automatically expanding and contracting the rear screed 31 depending on the traveling speed and the steering angle of the asphalt finisher 100 when automatically steering the asphalt finisher 100.

In the shown example, the screed expansion and contraction control unit 50c generates an expansion and contraction command with respect to the screed expanding and contracting cylinder 7 based on coordinates on a boundary line calculated and stored by the coordinate calculation unit 50a. The expansion and contraction command is, for example, a command related to an expansion and contraction speed, a command related to an expansion and contraction amount, a combination thereof, or the like.

Specifically, the screed expansion and contraction control unit 50c executes feed-forward control of the expansion and contraction amount of the rear screed 31. More specifically, the screed expansion and contraction control unit 50c expands and contracts the left screed expanding and contracting cylinder 7L such that coordinates of a predetermined part (for example, a left front end point) of the left rear screed 31L match left target coordinates. The left target coordinates are an example of target coordinates and are, for example, coordinates of the point VL at a closest position in front of the predetermined part (for example, the left front end point) of the left rear screed 31L. In addition, the screed expansion and contraction control unit 50c expands and contracts the right screed expanding and contracting cylinder 7R such that coordinates of a predetermined part (for example, a right front end point) of the right rear screed 31R match right target coordinates. The right target coordinates are another example of the target coordinates and are, for example, coordinates of the point VR at a closest position in front of the predetermined part (for example, the right front end point) of the right rear screed 31R. In addition, the screed expansion and contraction control unit 50c may be configured to determine an expansion and contraction speed depending on the traveling speed of the asphalt finisher 100 detected by the traveling speed sensor S1.

Similar to the coordinates of the point VL and the point VR, the coordinates of the predetermined part of the rear screed 31, such as the coordinates of the left front end point of the left rear screed 31L and the coordinates of the right front end point of the right rear screed 31R, can be calculated by the coordinate calculation unit 50a. Specifically, the coordinate calculation unit 50a can calculate a relative position of the object detection device 51 with respect to the position of a reference point such as the center point of the tractor 1 based on the expansion and contraction amount of the expanding and contracting member TA performing positioning of the object detection device 51 or the like. Similarly, the coordinate calculation unit 50a can calculate a relative position of each of the left front end point of the left rear screed 31L and the right front end point of the right rear screed 31R with respect to the position of the reference point based on the expansion and contraction amount of the rear screed 31 or the like. In addition, the coordinate calculation unit 50a can calculate a relative position of the reference point at a second time point with respect to the position of the reference point at a first time point based on outputs of the traveling speed sensor S1, the steering angle sensor, and the like. For this reason, the coordinate calculation unit 50a can calculate a relative position of each of the point VL, the point VR, the left front end point of the left rear screed 31L, the right front end point of the right rear screed 31R at another time point with respect to the position of the reference point at the first time point.

The obstacle detection unit 50d is configured to be capable of detecting an obstacle based on an output of the obstacle detection device 55. In the shown example, the obstacle detection unit 50d determines whether or not there is an obstacle on the left collision course T1L of the left object detection device 51L based on an output of the left obstacle detection device 55L and determines whether or not there is an obstacle on the right collision course T1R of the right object detection device 51R based on an output of the right obstacle detection device 55R.

In addition, in a case where an obstacle is detected on the collision course T1 of the object detection device 51, the obstacle detection unit 50d may be configured to calculate a distance between the object detection device 51 (obstacle detection device 55) and the obstacle as a front distance.

More specifically, in a case where an obstacle is detected on the left collision course T1L of the left object detection device 51L, the obstacle detection unit 50d may be configured to calculate a distance between the left object detection device 51L (left obstacle detection device 55L) and the obstacle as a left front distance. In addition, in a case where an obstacle is detected on the right collision course T1R of the right object detection device 51R, the obstacle detection unit 50d may be configured to calculate a distance between the right object detection device 51R (right obstacle detection device 55R) and the obstacle as a right front distance.

In addition, in a case where a front distance is equal to or smaller than a predetermined value FD (see Fig. 1), the obstacle detection unit 50d may determine that there is a possibility in which the object detection device 51 and an obstacle thereof collide with each other. In other words, in a case where the front distance is larger than the predetermined value FD, the obstacle detection unit 50d may be configured not to determine that there is a possibility in which the object detection device 51 and the obstacle thereof collide with each other. That is, in this case, the obstacle detection unit 50d may determine that there is no possibility of collision.

The predetermined value FD may be a value registered in advance or may be a value dynamically set. In the shown example, the predetermined value FD is a value stored in advance in the non-volatile storage device and is larger than a distance between the object detection device 51 and a front end of the asphalt finisher 100 in a direction along the front-rear axis AX. The predetermined value FD may be a value that is equal to or smaller than the distance between the object detection device 51 and the front end of the asphalt finisher 100 in the direction along the front-rear axis AX. In addition, the predetermined value FD may be dynamically set based on at least one of design data stored in advance in the volatile storage device or the non-volatile storage device and the traveling speed of the asphalt finisher 100. Specifically, the obstacle detection unit 50d may set the predetermined value FD based on at least one of a curvature radius, a slope, and the like of a road derived from the design data. Alternatively, the obstacle detection unit 50d may set the predetermined value FD based on the traveling speed of the asphalt finisher 100.

Alternatively, the obstacle detection unit 50d may determine whether or not there is a possibility in which the object detection device 51 and an obstacle thereof collide with each other, using at least one of a curvature radius, a slope, and the like of a road derived from a front distance and design data.

In addition, the obstacle detection unit 50d may be configured to output an alarm start command to the alarm device 56 in a case where it is determined that there is an obstacle on the collision course T1 of the object detection device 51. In this case, the alarm device 56 that has received the alarm start command may be configured to output at least one of a visual alarm and an audible alarm.

In addition, the obstacle detection unit 50d may be configured to output an alarm start command to the alarm device 56 in a case where it is determined that there is a possibility in which the object detection device 51 and an obstacle thereof collide with each other. In this case, the obstacle detection unit 50d may make content of an alarm output in a case where it is determined that there is an obstacle on the collision course T1 of the object detection device 51 and content of an alarm output in a case where it is determined that there is a possibility in which the object detection device 51 and an obstacle thereof collide with each other different from each other.

Alternatively, the obstacle detection unit 50d may be configured not to output an alarm start command to the alarm device 56 until it is determined that there is a possibility in which the object detection device 51 and an obstacle thereof collide with each other even in a case where it is determined that there is the obstacle on the collision course T1 of the object detection device 51.

In addition, the obstacle detection unit 50d may be configured to stop an output of an alarm when a predetermined release operation by the operator is performed or when the obstacle detection device 55 no longer detects an obstacle after the output of the alarm is started. In the shown example, the predetermined release operation is an operation of an alarm release button (not shown) that is a manipulation device provided close to the vehicle-mounted display device 52.

Specifically, the obstacle detection unit 50d may be configured to output an alarm stop command to the alarm device 56 in a case where it is determined that the alarm release button is operated or a case where it is determined that there is no obstacle on the collision course T1 of the object detection device 51 after an output of an alarm is started.

Alternatively, the obstacle detection unit 50d may be configured not to stop an output of an alarm until it is determined that the alarm release button is operated even in a case where it is determined that there is no obstacle on the collision course T1 of the object detection device 51.

In addition, the obstacle detection unit 50d may move the object detection device 51 by operating at least one of the pivoting member SB and the expanding and contracting member TA which configure the attachment member 60 in a case where it is determined that there is a possibility in which the object detection device 51 and an obstacle thereof collide with each other. This is to avoid collision between the obstacle and the object detection device 51. In addition, the obstacle detection unit 50d may bring back the object detection device 51 to an original position by operating at least one of the pivoting member SB and the expanding and contracting member TA in a case where it is determined that there is no possibility in which the object detection device 51 and the obstacle thereof collide with each other, that is, a case where the object detection device 51 has passed through the obstacle thereof.

In addition, the obstacle detection unit 50d may decelerate the asphalt finisher 100 and may stop the asphalt finisher 100 in a case where it is determined that there is a possibility in which the object detection device 51 and an obstacle thereof collide with each other.

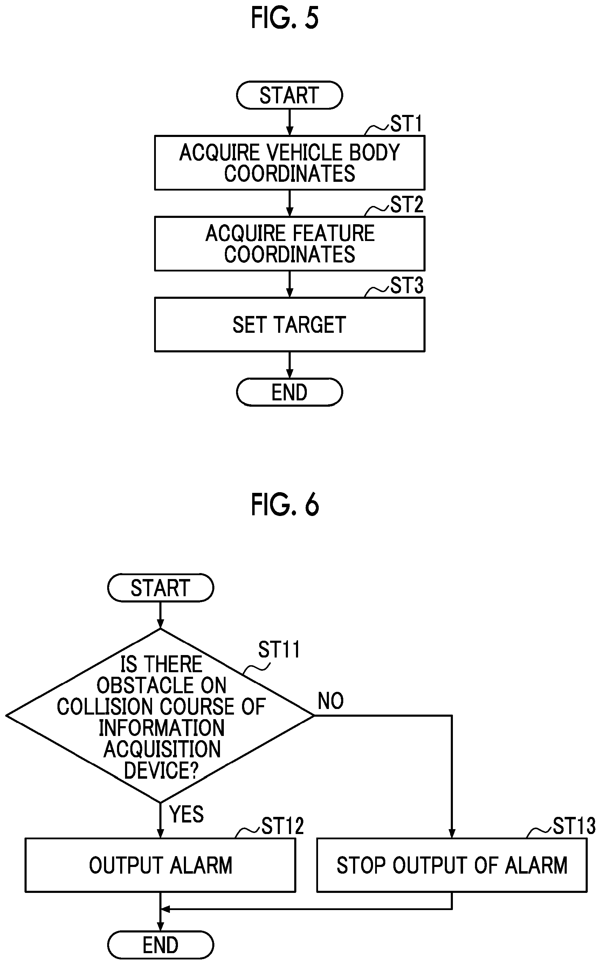

Next, processing in which the controller 50 sets a target when expanding and contracting the rear screed 31 (hereinafter, referred to as a "target setting processing") will be described with reference to Fig. 5. Fig. 5 is a flowchart showing an example of a flow of the target setting processing. The controller 50 repeatedly executes the target setting processing in a predetermined control cycle.

First, the controller 50 acquires vehicle body coordinates (Step ST1). The vehicle body coordinates mean coordinates of a predetermined part of the asphalt finisher 100 and includes coordinates of a predetermined part of the rear screed 31 such as coordinates of the left front end point of the left rear screed 31L and coordinates of the right front end point of the right rear screed 31R.

Specifically, the controller 50 stores the center point of the asphalt finisher 100 at the first time point such as a construction start time point as a reference point.

Then, during construction, the controller 50 can derive a relative position of the center point of the asphalt finisher 100 and a direction of the asphalt finisher 100 at any time point such as the present time point based on outputs of the traveling speed sensor S1 and the steering angle sensor. The relative position of the center point means a relative position of the center point with respect to the reference point. The same applies to the following description.

In the shown example, the controller 50 can derive coordinates of a turning center based on the output of the steering angle sensor. Then, the controller 50 can derive the relative position of the center point of the asphalt finisher 100 and the direction of the asphalt finisher 100 at any time point such as the present time point based on the coordinates of the turning center and the output of the traveling speed sensor S1. The controller 50 may be configured to derive a moving distance, a change in a posture, or the like based on an output of an inertial measurement unit (IMU), a global navigation satellite system (GNSS), a surveying instrument, or the like (not shown) mounted on the asphalt finisher 100. Further, the controller 50 can derive a relative position of the predetermined part of the asphalt finisher 100 based on the relative position of the center point of the asphalt finisher 100 and the direction of the asphalt finisher 100 at any time point, a known dimension of each of members configuring the asphalt finisher 100, or the like. The relative position of the predetermined part of the asphalt finisher 100 includes a relative position of the left object detection device 51L and a relative position of the right object detection device 51R.

After acquiring the vehicle body coordinates, the controller 50 acquires feature coordinates (Step ST2). The feature coordinates mean coordinates of a feature such as the object AP and includes coordinates on a boundary line of a road, which is a construction target, on the left side, coordinates on a boundary line of the road, which is the construction target, on the right side, and the like.

Specifically, the controller 50 can calculate coordinates of the point VL that are coordinates on the boundary line of the road, which is the construction target, on the left side and coordinates of the point VR0 that are coordinates on the boundary line of the road, which is the construction target, on the right side based on the relative position of the center point of the asphalt finisher 100 and the direction of the asphalt finisher 100 at any time point and an output of the object detection device 51 at any time point.

After acquiring the vehicle body coordinates and the feature coordinates, the controller 50 sets a target (Step ST3). In the shown example, the controller 50 calculates a target value of an expansion and contraction amount of the rear screed 31.

Specifically, the controller 50 derives a distance between the point VL that is at a closest position in front of a predetermined part (for example, the left front end point) of the left rear screed 31L and the front-rear axis AX that is a center axis of the asphalt finisher 100 (hereinafter, referred to as a "first distance") based on the relative position of the center point of the asphalt finisher 100 and the direction of the asphalt finisher 100 at the present time point. In addition, the controller 50 derives a distance between the predetermined part (for example, the left front end point) of the left rear screed 31L and the front-rear axis AX of the asphalt finisher 100 (hereinafter, referred to as a "second distance") based on the relative position of the center point of the asphalt finisher 100 and the direction of the asphalt finisher 100 at the present time point. Then, the controller 50 sets a difference between the first distance and the second distance as a target expansion and contraction amount. Specifically, the controller 50 sets the difference between the first distance and the second distance as a target expansion amount in a case where the first distance is larger than the second distance and sets the difference between the first distance and the second distance as a target contraction amount in a case where the first distance is smaller than the second distance.

In addition, the controller 50 determines an expansion and contraction speed based on a distance between the predetermined part (for example, the left front end point) of the left rear screed 31L and the point VL that is at a closest position in front thereof in a traveling direction (hereinafter, referred to as a "third distance"). Specifically, the controller 50 increases the expansion and contraction speed as the third distance increases when the target expansion and contraction amount is the same.

Alternatively, the controller 50 may estimate the position of the predetermined part (for example, the left front end point) of the left rear screed 31L after a predetermined time (for example, 1 second later) and derive a line segment that connects the closest point VL in front of the position of the predetermined part after the predetermined time and the closest point VL at the rear thereof to each other. Then, the controller 50 may use a distance between an interpolation point on the line segment (a point interpolating two points VL) and the front-rear axis AX as the first distance.

With the configuration, since the controller 50 can identify the position of the boundary line in front of the screed 3, the rear screed 31 can be expanded and contracted at an appropriate timing without excess or deficiency. For this reason, since the controller 50 can suppress or prevent the expansion and contraction of the rear screed 31 from being delayed in a case where a construction width changes, construction accuracy can be improved.

With the configuration described above, the screed expansion and contraction control unit 50c can expand and contract the left rear screed 31L such that the coordinates of the left front end point of the left rear screed 31L match coordinates on the guide line GD when the asphalt finisher 100 has advanced by a predetermined distance. That is, the screed expansion and contraction control unit 50c can control the expansion and contraction amount of the left rear screed 31L such that also a distance between the point VL and the left front end point of the left rear screed 31L in the vehicle width direction becomes zero when a distance between the point VL and the left front end point of the left rear screed 31L in the traveling direction at any time point becomes zero.

Similarly, the screed expansion and contraction control unit 50c can expand and contract the right rear screed 31R such that the coordinates of the right front end point of the right rear screed 31R match coordinates of the nearest point VR in front thereof when the asphalt finisher 100 has advanced by a predetermined distance. That is, the screed expansion and contraction control unit 50c can control the expansion and contraction amount of the right rear screed 31R such that also a distance between the point VR and the right front end point of the right rear screed 31R in the vehicle width direction becomes zero when a distance between the point VR and the right front end point of the right rear screed 31R in the traveling direction at any time point becomes zero.

Next, processing in which the controller 50 controls the alarm device 56 (hereinafter, referred to as "alarm processing") will be described with reference to Fig. 6. Fig. 6 is a flowchart showing an example of a flow of the alarm processing. In the shown example, the controller 50 repeatedly executes the alarm processing in a predetermined control cycle while the asphalt finisher 100 advances.

First, the controller 50 determines whether or not there is an obstacle on the collision course of the information acquisition device (Step ST11). In the shown example, the obstacle detection unit 50d of the controller 50 determines whether or not there is an obstacle on the collision course T1 of the object detection device 51 based on an output of the object detection device 51 that is an example of the information acquisition device. The controller 50 may identify the position and the height of the detected obstacle. Then, in a case where the height of the identified obstacle is larger than the height of the object detection device 51, the controller 50 may determine that there is no obstacle since there is no possibility of collision. In addition, the controller 50 may specify the position of the obstacle as coordinates based on a distance from the obstacle detection device 55. In addition, the controller 50 may store the position of the detected obstacle on an electronic construction drawing.

In a case where it is determined that there is an obstacle on the collision course of the information acquisition device (YES of Step ST11), the controller 50 outputs an alarm (Step ST12). In the shown example, in a case where it is determined that there is an obstacle on the collision course T1, the obstacle detection unit 50d outputs an alarm start command to the alarm device 56, and an output of an alarm by the alarm device 56 is started.

On the other hand, in a case where it is determined that there is no obstacle on the collision course of the information acquisition device (NO of Step ST11), the controller 50 stops an output of an alarm (Step ST13). In the shown example, in a case where it is determined that there is no obstacle on the collision course T1 in a state where an output of an alarm is not started, the obstacle detection unit 50d ends this time of alarm processing without outputting an alarm start command to the alarm device 56. In addition, in a case where it is determined that there is no obstacle on the collision course T1 in a state where an output of an alarm is already started, the obstacle detection unit 50d outputs an alarm stop command to the alarm device 56 and stops the output of the alarm by the alarm device 56.

In a case where the alarm release button is operated, the controller 50 may stop an output of an alarm regardless of whether or not there is an obstacle on the collision course of the information acquisition device.

By executing such alarm processing, the controller 50 can notify the operator of the asphalt finisher 100 and the worker working in the surroundings of the asphalt finisher 100 of the fact that there is an obstacle on the collision course of the information acquisition device.

In addition to causing an alarm to be output in a case where it is determined that there is an obstacle on the collision course of the information acquisition device or instead thereof, the controller 50 may be configured to output an alarm in a case where it is determined that there is a possibility in which the information acquisition device and an obstacle thereof collide with each other. In addition, the controller 50 may make content of an alarm different when outputting an alarm in each of a case where it is determined that there is an obstacle on the collision course of the information acquisition device and a case where it is determined that there is a possibility in which the information acquisition device and an obstacle thereof collide with each other.

By executing such alarm processing, the controller 50 can notify the operator of the asphalt finisher 100 and the worker working in the surroundings of the asphalt finisher 100 of the fact that there is a possibility in which the information acquisition device and an obstacle thereof collide with each other.

As described above, as shown in Figs. 1 and 2, the asphalt finisher 100 that is an example of the road machine according to the embodiment of the present disclosure includes the tractor 1, the hopper 2 which is provided in front of the tractor 1 and which receives the paving material PV, the conveyor CV which feeds the paving material PV in the hopper 2 to the rear of the tractor 1, the screw SC which spreads the paving material PV fed by the conveyor CV at the rear of the tractor 1, the screed 3 which levels the paving material PV spread by the screw SC at the rear of the screw SC, and the control device (controller 50) that calculates coordinates on the boundary line (guide line GD) in a predetermined coordinate system based on information related to a feature (object AP) that defines the boundary line (guide line GD) of the construction target range positioned in front of the screed 3.

In addition, in the asphalt finisher 100, the screed 3 is configured to be capable of expanding and contracting in the vehicle width direction. For this reason, the controller 50 can expand and contract the screed 3 such that coordinates on the boundary line (guide line GD) and coordinates of an end portion of the screed 3 match each other.

With the configuration, the controller 50 can recognize a change in a direction of the boundary line (guide line GD) before the screed 3 reaches a portion where the direction of the boundary line (guide line GD) changes. For this reason, the controller 50 can appropriately control the expansion and contraction amount of the screed 3 compared to a case where the screed is expanded and contracted such that an interval existing between the end portion of the screed 3 and the boundary line (guide line GD) is recognized and then the interval is decreased. In other words, the controller 50 can suppress the generation of the interval between the end portion of the screed 3 and the boundary line (guide line GD).

In addition, in the asphalt finisher 100, the controller 50 may be configured to calculate coordinates on the boundary line (guide line GD) each time the tractor 1 advances by a predetermined distance. In the example shown in Fig. 2, the controller 50 is configured to intermittently calculate and store coordinates of each of the point VL and the point VR on the boundary line (guide line GD).

The configuration has an effect in which it can be suppressed that a calculation load related to calculation of coordinates becomes needlessly high.

In addition, in other words, the controller 50 is configured to expand and contract the screed 3 such that coordinates on the boundary line (guide line GD) calculated at the first time point become target coordinates of the end portion of the screed 3 at the second time point after the first time point.

With the configuration, the controller 50 can recognize a change in a direction of the boundary line (guide line GD) before the screed 3 reaches a portion where the direction of the boundary line (guide line GD) changes. For this reason, the configuration has an effect in which the expansion and contraction amount of the screed 3 can be more appropriately controlled.

In addition, the asphalt finisher 100 may include the object detection device 51 that acquires information related to the feature (object AP) which defines the boundary line (guide line GD) of the road, which is the construction target positioned in front of the screed 3. In addition, the object detection device 51 may be disposed in front of the screed 3. In the example shown in Fig. 2, the object detection device 51 is disposed in front of the tractor 1 which is in front of the screed 3.

With the configuration, the object detection device 51 can acquire information related to the portion where the direction of the boundary line (guide line GD) changes (for example, a relative position with respect to the vehicle body (tractor 1), a distance image, an image, or the like) before the screed 3 reaches the portion. For this reason, the configuration has an effect in which the controller 50 can recognize a change in the direction of the boundary line (guide line GD) before the screed 3 reaches the portion where the direction of the boundary line (guide line GD) changes.

In addition, as shown in Fig. 2, the asphalt finisher 100 that is an example of the road machine according to the embodiment of the present disclosure includes the tractor 1, the hopper 2 which is provided in front of the tractor 1 and which receives a paving material, the conveyor CV which feeds the paving material PV in the hopper 2 to the rear of the tractor 1, the screw SC which spreads the paving material PV fed by the conveyor CV at the rear of the tractor 1, the screed 3 which levels the paving material PV spread by the screw SC at the rear of the screw SC and which can expand and contract in the vehicle width direction, the object detection device 51 which is an example of the information acquisition device, which is disposed out of a range of a width WC of the tractor 1 and which acquires information of the surroundings, and the obstacle detection device 55 which detects an obstacle on the collision course of the object detection device 51. Out of the range of the width WC of the tractor 1 may be out of a range of the width of the hopper 2 in a fully open state.

With the configuration, the asphalt finisher 100 can recognize the presence of an obstacle having a possibility of colliding with the information acquisition device attached to protrude from the width WC of the tractor 1 in the vehicle width direction beforehand. For this reason, the asphalt finisher 100 can suppress or prevent the information acquisition device from hitting the obstacle during construction.

In addition, the asphalt finisher 100 may be configured to be capable of notifying surroundings of detection of an obstacle by the obstacle detection device 55.

With the configuration, the asphalt finisher 100 can notify the operator of the asphalt finisher 100, the worker working in the surroundings of the asphalt finisher 100, or the like of the fact that there is an obstacle on the collision course of the information acquisition device. For this reason, the asphalt finisher 100 can suppress or prevent the information acquisition device from hitting the obstacle during construction.

In addition, the asphalt finisher 100 may include the controller 50 that is an example of the control device. In addition, the obstacle detection device 55 may be configured to detect an obstacle positioned in a predetermined space. In addition, in a case where it is determined that an obstacle detected by the obstacle detection device 55 is in the collision course of the object detection device 51, the controller 50 may be configured to operate the alarm device 56 that is an example of an output device and to notify surroundings of the fact that the obstacle is in the collision course.

In the shown example, the obstacle detection device 55 includes the left obstacle detection device 55L and the right obstacle detection device 55R. In addition, a predetermined space related to the left obstacle detection device 55L is, for example, a rectangular parallelepiped space of which a width is a distance WDL between a left end of the tractor 1 and a left end of the left object detection device 51L in the vehicle width direction (see Fig. 2) and of which a height is a distance HT between the roadbed BS and an upper end of the left object detection device 51L in a direction perpendicular to each of the vehicle width direction and the traveling direction (see Fig. 1). In addition, a predetermined space related to the right obstacle detection device 55R is, for example, a rectangular parallelepiped space of which a width is a distance WDR between a right end of the tractor 1 and a right end of the right object detection device 51R in the vehicle width direction (see Fig. 2) and of which a height is a distance between the roadbed BS and an upper end of the right object detection device 51R in the direction perpendicular to each of the vehicle width direction and the traveling direction.

With the configuration, the controller 50 can cause the alarm device 56 to start an output of an alarm in a case where it is determined that there is an obstacle on the collision course of the information acquisition device. For this reason, the controller 50 can more reliably prevent the information acquisition device from hitting the obstacle during construction.

In addition, the asphalt finisher 100 may include the alarm device 56 that outputs an alarm. In addition, the alarm device 56 may be configured to output an alarm when the obstacle detection device 55 detects an obstacle and to stop the output of the alarm when a release operation by the operator is performed or when the obstacle detection device 55 no longer detects an obstacle.

With the configuration, the controller 50 can output an alarm in an appropriate situation and can improve reliability of the alarm. For this reason, the controller 50 can more reliably prevent the information acquisition device from hitting an obstacle during construction.

In addition, although the controller 50 specifies the position of an obstacle through coordinates in the embodiment, the coordinates may not necessarily be used. For example, the controller 50 can recognize a positional relationship between the object detection device 51 of the asphalt finisher 100 and the obstacle based on a distance from the obstacle detection device 55 to the obstacle. Accordingly, the controller 50 can avoid contact between the object detection device 51 and the obstacle.

The preferable embodiment of the present invention has been described hereinbefore. However, the present invention is not limited to the embodiment described above and is not limited to an embodiment to be described later. Various modifications, substitutions, or the like can be applied to the embodiment that is described above or to be described later without departing from the scope of the present invention. In addition, each of characteristics described with reference to the embodiment that is described above or that is to be described later may be combined as appropriate insofar as there is no technical inconsistency.

For example, in the embodiment described above, the object detection device 51 is configured to acquire information related to a feature (object AP) which defines the boundary line (guide line GD) of the construction target range positioned in front of the screed 3. However, the controller 50 may be configured to acquire information related to a feature (object AP) from design data stored in advance in the volatile storage device or the non-volatile storage device. In this case, acquisition of the information related to a feature (object AP) by the object detection device 51 may be omitted.

In addition, the object detection device 51 is attached to the asphalt finisher 100 in the embodiment described above, but may be attached to a moving body other than the asphalt finisher 100 such as a vehicle and a multicopter.

In addition, although the information acquisition device is the object detection device 51 configured to acquire information related to a feature that is in a predetermined range of the road which is the construction target in the embodiment described above, the information acquisition device may be another device such as a camera that captures an image of a space to the left of a left hopper wing in a blind spot when viewed from the driver's seat.

### Brief Description of the Reference Symbols

1 tractor
1S driver's seat
2 hopper
3 screed
3A leveling arm
3AL left leveling arm
3AR right leveling arm
5 rear wheel
6 front wheel
7 screed expanding and contracting cylinder
7L left screed expanding and contracting cylinder
7R right screed expanding and contracting cylinder
30 front screed
30L left front screed
30R right front screed
31 rear screed
31L left rear screed
31R right rear screed
32 tread plate
32C central tread plate
32L left tread plate
32R right tread plate
41 side plate
41L left side plate
41R right side plate
42 mold board
42L left mold board
42R right mold board
43 retaining plate
43L left retaining plate
43R right retaining plate
50 controller
50a coordinate calculation unit
50b steering control unit
50c screed expansion and contraction control unit
50d obstacle detection unit
51 object detection device
51L left object detection device
51R right object detection device
52 vehicle-mounted display device
53 steering device
54 screed expanding and contracting device
55 obstacle detection device
55L left obstacle detection device
55R right obstacle detection device
56 alarm device
60 attachment member
60L left attachment member
60R right attachment member
100 asphalt finisher
AP object
APL left object
APL1 first left object
APL2 second left object
APR right object
APR1 first right object
APR2 second right object
AX front-rear axis
BS roadbed
CL center line
CV conveyor
DS operation support system
GD guide line
GDL left guide line
GDR right guide line
NP newly constructed pavement body
PV paving material
S1 traveling speed sensor
SB, SBa pivoting member
SC screw
SC screw
SCL left extension screw
SCR right extension screw
SH steering wheel
T1 collision course
T1L left collision course
T1R right collision course
TA expanding and contracting member
ZL left monitoring range
ZR right monitoring range

## Claims

1. A road paving machine (100) comprising:
a tractor (1);
a hopper (2) that is provided in front of the tractor (1) and that is adapted to receive
a paving material (PV);
a conveyor (CV) that is adapted to feed the paving material (PV) in the hopper (2) to a rear of the tractor (1);
a screw (SC) that is adapted to spread
the paving material (PV) fed by the conveyor (CV) at the rear of the tractor (1);
a screed (3) that is adapted to level
the paving material (PV) spread by the screw (SC) at a rear of the screw (SC) and that is capable of expanding and contracting in a vehicle width direction;
an information acquisition device that is disposed out of a range of a width (WC) of the tractor (1) and that is adapted to acquire
information of surroundings and comprises an object detection device (51) or a camera; and **characterized by**
an obstacle detection device (55) that is adapted to detect an obstacle in a collision course (T1) of the information acquisition device.

2. The road paving machine (100) according to claim 1,
wherein the obstacle detection device (55) is adapted to notify surroundings of a detection of the obstacle.

3. The road paving machine (100) according to claim 1 or 2, further comprising:
a control device (50), wherein the obstacle detection device (55) is adapted to detect the obstacle positioned in a rectangular parallelepiped space of which a width is a distance (WDL, WDR) between the tractor (1) and a distal end of the information acquisition device in the vehicle width direction and of which a height is a distance (HT) between a roadbed (BS) and an upper end of the information acquisition device in a direction perpendicular to each of the vehicle width direction and a traveling direction, and
in a case where it is determined that the obstacle detected by the obstacle detection device (55) is in the collision course (T1) of the information acquisition device, the control device (50) is adapted to operate an output device (56) and to notify thereby surroundings of a fact that the obstacle is in the collision course (T1).

4. The road paving machine (100) according to claim 1 or 2, further comprising:
an alarm device (56) that is adapted to output an alarm,
wherein the alarm device (56) outputs the alarm when the obstacle detection device (55) detects the obstacle and stops the output of the alarm when a release operation by an operator is performed or when the obstacle detection device (55) no longer detects the obstacle.

## Patentansprüche

1. Straßenbaumaschine (100), umfassend:
einen Traktor (1);
einen Trichter (2), der vor dem Traktor (1) vorgesehen ist und der angepasst ist, ein Straßendeckenmaterial (PV) zu empfangen;
einen Förderer (CV), der angepasst ist, das Straßendeckenmaterial (PV) in dem Trichter (2) zu einer Rückseite des Traktors (1) zu fördern;
eine Schnecke (SC), die angepasst ist, das von dem Förderer (CV) zu der Rückseite des Traktors (1) geförderte Straßendeckenmaterial (PV) zu verteilen;
eine Bohle (3), die angepasst ist, das von der Schnecke (SC) an einer Rückseite der Schnecke (SC) verteilte Straßendeckenmaterial (PV) zu nivellieren und die in der Lage ist, sich in einer Fahrzeugbreitenrichtung zu erweitern und zusammenzuziehen;
eine Informationserfassungsvorrichtung, die außerhalb eines Bereichs einer Breite (WC) des Traktors (1) angeordnet ist und die angepasst ist, Informationen von Umgebungen zu erfassen, und eine Objektdetektionsvorrichtung (51) oder eine Kamera umfasst; und **gekennzeichnet ist durch**
eine Hindernisdetektionsvorrichtung (55), die angepasst ist, ein Hindernis auf einem Kollisionskurs (T1) der Informationserfassungsvorrichtung zu detektieren.

2. Straßenfertigungsmaschine (100) nach Anspruch 1,
wobei die Hindernisdetektionsvorrichtung (55) angepasst ist, Umgebungen über eine Detektion des Hindernisses zu benachrichtigen.

3. Straßenfertigungsmaschine (100) nach Anspruch 1 oder 2, ferner umfassend:
eine Steuervorrichtung (50),
wobei die Hindernisdetektionsvorrichtung (55) angepasst ist, das Hindernis zu detektieren, das in einem rechtwinkligen Parallelepiped-Raum positioniert ist, dessen eine Breite ein Abstand (WDL, WDR) zwischen dem Traktor (1) und einem distalen Ende der Informationserfassungsvorrichtung in der Fahrzeugbreitenrichtung ist und dessen eine Höhe ein Abstand (HT) zwischen einem Straßenbett (BS) und einem oberen Ende der Informationserfassungsvorrichtung in einer Richtung senkrecht zu jeder der Fahrzeugbreitenrichtung und einer Fahrtrichtung ist, und
in einem Fall, bei dem bestimmt wird, dass sich das von der Hindernisdetektionsvorrichtung (55) detektierte Hindernis auf dem Kollisionskurs (T1) der Informationserfassungsvorrichtung befindet, die Steuervorrichtung (50) angepasst ist, eine Ausgabevorrichtung (56) zu betätigen und Umgebungen dadurch über eine Tatsache zu benachrichtigen, dass sich das Hindernis auf dem Kollisionskurs (T1) befindet.

4. Straßenfertigungsmaschine (100) nach Anspruch 1 oder 2, ferner umfassend:
eine Alarmvorrichtung (56), die angepasst ist, einen Alarm auszugeben,
wobei die Alarmvorrichtung (56) den Alarm ausgibt, wenn die Hindernisdetektionsvorrichtung (55) das Hindernis detektiert, und die Ausgabe des Alarms stoppt, wenn ein Freigabevorgang durch einen Bediener durchgeführt wird oder wenn die Hindernisdetektionsvorrichtung (55) das Hindernis nicht mehr detektiert.

## Revendications

1. Une paveuse de route (100) comprenant :
un tracteur (1) ;
une trémie (2) qui est prévue face au tracteur (1) et qui est adaptée pour recevoir un matériau de pavage (PV) ;
un convoyeur (CV) qui est adapté pour fournir le matériau de pavage (PV) dans la trémie (2) au niveau d'un arrière du tracteur (1) ;
une vis (SC) qui est adaptée pour étaler le matériau de pavage (PV) fourni par le convoyeur (CV) à l'arrière du tracteur (1) ;
une barre lisseuse (3) qui est adaptée pour niveler le matériau de pavage (PV) étalé par la vis (SC) au niveau d'un arrière de la vis (SC) et qui est capable de se déployer et de se rétracter dans un sens de la largeur du véhicule ;
un dispositif d'acquisition d'informations qui est disposé hors de portée d'une largeur (WC) du tracteur (1) et qui est adapté pour acquérir des informations sur l'environnement et comprend un dispositif détection d'objets (51) ou une caméra ; et **caractérisée par**
un dispositif de détection d'obstacle (55) qui est adapté pour détecter un obstacle sur une trajectoire de collision (T1) du dispositif d'acquisition d'informations.

2. La paveuse de route (100) selon la revendication 1, dans laquelle le dispositif de détection d'obstacle (55) est adapté pour informer l'environnement d'une détection de l'obstacle.

3. La paveuse de route (100) selon la revendication 1 ou 2, comprenant en outre :
un dispositif de commande (50),
dans laquelle le dispositif de détection d'obstacle (55) est adapté pour détecter l'obstacle positionné dans un espace en parallélépipède rectangulaire dont une largeur est une distance (WDL, WDR) entre le tracteur (1) et une extrémité distale du dispositif d'acquisition d'informations dans le sens de la largeur du véhicule, et dont une hauteur est une distance (HT) entre une plate-forme (BS) et une extrémité supérieure du dispositif d'acquisition d'informations dans une direction perpendiculaire à chacun du sens de la largeur du véhicule et d'une direction de déplacement, et
lorsqu'il est déterminé que l'obstacle détecté par le dispositif de détection d'obstacle (55) se trouve sur la trajectoire de collision (T1) du dispositif d'acquisition d'informations, le dispositif de commande (50) est adapté pour faire fonctionner un dispositif de sortie (56) et pour indiquer à l'environnement, à l'aide de celui-ci, que l'obstacle se trouve sur la trajectoire de collision (T1).

4. La paveuse de route (100) selon la revendication 1 ou 2, comprenant en outre :
un dispositif d'alarme (56) qui est adapté pour déclencher une alarme,
dans laquelle le dispositif d'alarme (56) déclenche l'alarme lorsque le dispositif de détection d'obstacle (55) détecte l'obstacle et arrête l'alarme lorsqu'une opération de désactivation est effectuée par un opérateur ou lorsque le dispositif de détection d'obstacle (55) ne détecte plus l'obstacle.
